(19) Europäisches Patentamt
European Patent Office
Office européen des brevets

(11) **EP 1 299 253 B1**

(12) **FASCICULE DE BREVET EUROPEEN**

(45) Date de publication et mention
de la délivrance du brevet:
**19.05.2010   Bulletin 2010/20**

(51) Int Cl.:
*B60C 15/04* (2006.01)          *B60C 15/05* (2006.01)
*B60C 15/06* (2006.01)          *B60C 9/02* (2006.01)
*B60C 15/00* (2006.01)

(21) Numéro de dépôt: **01962779.3**

(22) Date de dépôt: **25.06.2001**

(86) Numéro de dépôt international:
**PCT/EP2001/007224**

(87) Numéro de publication internationale:
**WO 2002/000452 (03.01.2002 Gazette 2002/01)**

(54) **PNEUMATIQUE A STRUCTURE D'ANCRAGE D'ARMATURE DE CARCASSE PERFECTIONNEE**

REIFEN MIT VERBESSERTER KARKASSENVERANKERUNGSSTRUKTUR

TYRE WITH IMPROVED CARCASS REINFORCEMENT ANCHORING STRUCTURE

(84) Etats contractants désignés:
**AT BE CH CY DE DK ES FI FR GB GR IE IT LI LU MC NL PT SE TR**

(30) Priorité:  **29.06.2000  FR 0008451**

(43) Date de publication de la demande:
**09.04.2003   Bulletin 2003/15**

(73) Titulaires:
• **Société de Technologie Michelin
63000 Clermont-Ferrand Cedex 09 (FR)**
• **Michelin Recherche et Technique S.A.
1763 Granges-Paccot (CH)**

(72) Inventeurs:
• **HERBELLEAU, Yves
F-63200 Riom (FR)**
• **GUERINON, Bernard
F-63100 Clermont-Ferrand (FR)**
• **ROUX, Pierre
F-63000 Clermont-Ferrand (FR)**

(74) Mandataire: **Le Cam, Stéphane Georges Elie
M.F.P. Michelin,
SGD/LG/PI - F 35 - Ladoux
63040 Clermont-Ferrand Cedex 09 (FR)**

(56) Documents cités:
**EP-A- 0 664 232       EP-A- 0 751 015
WO-A-00/34059       WO-A-98/54006
FR-A- 2 771 050**

**Description**

L'invention concerne les pneumatiques destinés à porter de lourdes charges tout en ayant des contraintes de tailles très fortes tels que par exemple les pneumatiques d'avion.

Les pneumatiques pour avion doivent résister à des conditions en service extrêmes, notamment en termes de charge appliquée et de vitesse compte tenu de leur poids et de leur taille faibles. Il en résulte, en dépit de leurs pressions de gonflage très élevées, supérieures à 12 bars, que leur écrasement ou flèche en service peut atteindre couramment des valeurs doubles de celles observées pour des pneumatiques poids lourds ou de tourisme.

Lors des décollages, des vitesses très élevées, de l'ordre de 350 km/heure, sont atteintes d'où des conditions d'échauffement aussi très sévères.

Toutes ces conditions sont particulièrement pénalisantes pour l'endurance des bourrelets de ces pneumatiques.

Le brevet US 4,832102 décrit un pneumatique d'avion comprenant un sommet, deux flancs et deux bourrelets, une armature de carcasse et une armature de sommet dans lequel l'armature de carcasse comprend deux alignements circonférentiels de renforts de haut module d'élasticité, ancrés dans les deux bourrelets, et l'armature de sommet comprend au moins un bloc de travail avec au moins une nappe de renforts de haut module d'élasticité. L'armature de carcasse est ancrée dans les bourrelets par le retournement, autour d'une tringle, des deux alignements circonférentiels de premiers renforts de haut module d'élasticité.

Le brevet FR-A-2771050 décrit un pneumatique d'avion dans lequel, chaque bourrelet est dépourvu de tringle, et dans lequel l'armature de carcasse présente dans chaque bourrelet un profil méridien courbé, ladite armature de carcasse étant renforcée par des nappes additionnelles, formée d'éléments de renforcement orientés sensiblement circonférentiellement.

Les demandes de brevet EP 0 582 196 et EP 0 664 232 ont récemment proposé, dans le cas de pneumatiques pour véhicules de tourisme, un nouveau type d'armature de carcasse d'un pneumatique et de son ancrage dans ses deux bourrelets. Un pneumatique, selon ces demandes, comporte un bourrelet avec des moyens d'ancrage de l'armature de carcasse comprenant des renforts orientés sensiblement circonférentiellement bordant axialement les alignements circonférentiels des renforts de l'armature de carcasse.

La demande WO 98/54006 propose un pneumatique dont l'armature de carcasse comprend deux ou trois alignements circonférentiels de renforts dans lequel chaque alignement circonférentiel est bordé axialement intérieurement et extérieurement par des renforts orientés sensiblement circonférentiellement. Cette demande indique pour constituer les renforts circonférentiels de nombreux types de renforts.

L'invention a pour objet un pneumatique dont l'ancrage de l'armature de carcasse est perfectionnée, tel que défini dans la revendication 1.

Dans ce qui suit, on entend par titre, la masse en grammes de mille mètres d'un renfort. Le titre est exprimé en tex. La contrainte subie par un renfort ou le module de ce renfort sont exprimés en " cN/tex ", cN voulant dire centi-newton.

On entend par " renfort " (" reinforcing thread ") tout élément de renforcement sous forme d'un fil, susceptible de renforcer une matrice déterminée, par exemple une matrice de caoutchouc. A titre de renforts, on citera par exemple des fibres multifilamentaires (" multifilament yarns "), ces fibres pouvant être tordues ou non sur elles-mêmes, des fils unitaires tels que des monofils de diamètre élémentaire élevé, avec ou sans torsion sur eux-mêmes, des câblés ou des retors (" cords ") obtenus par des opérations de câblage ou retordage de ces fils unitaires ou de ces fibres, de tels renforts pouvant être hybrides, c'est-à-dire composites, comportant des éléments de natures différentes.

On entend par " retors " (" plied yarn " ou " folded yarn ") un renfort constitué par deux brins (" single yarns ") ou plus assemblés ensemble par des opérations de retordage ; ces brins, généralement formés de fibres multifilamentaires, sont d'abord retordus individuellement dans un sens (direction de torsion S ou Z) au cours d'une première étape de retordage, puis tordus ensemble en sens inverse (direction de torsion Z ou S, respectivement) au cours d'une seconde étape de retordage.

On entend par " renfort adhérisé" un renfort ayant subi un traitement d'enduction approprié, dit d'encollage ou d'adhérisation, susceptible de faire adhérer ce renfort, après un traitement thermique approprié, à la matrice à laquelle il est destiné.

On entend par " axiale " une direction parallèle à l'axe A du pneumatique ; cette direction peut être " axialement intérieure " lorsqu'elle est dirigée vers l'intérieur du pneumatique et " axialement extérieure " lorsqu'elle est dirigée vers l'extérieur du pneumatique.

On entend par " radiale " une direction perpendiculaire à l'axe A du pneumatique et passant par cet axe A. Cette direction peut être " radialement intérieure " ou " radialement extérieure " selon qu'elle se dirige vers l'axe A ou vers l'extérieur du pneumatique.

On entend par " orientation sensiblement circonférentielle " une orientation ne s'écartant pas de plus de cinq degrés de la direction circonférentielle.

On entend par " module d'élasticité " d'un mélange caoutchoutique un module sécant d'extension à 10 % de déformation et à température ambiante.

Le pneumatique selon l'invention comprend un sommet, deux flancs et deux bourrelets, une armature de carcasse ancrée dans les deux bourrelets et une armature de sommet. Ce pneumatique est tel que l'armature de carcasse comprend au moins deux alignements circonférentiels de premiers renforts de haut module d'élasticité, chaque alignement circonférentiel des premiers renforts étant, dans chaque bourrelet, bordé axialement par des seconds renforts orientés sensiblement circonférentiellement de module supérieur ou égal à celui des premiers renforts, les premiers renforts et seconds renforts étant séparés par une couche de mélange de très haut module d'élasticité et est tel que les seconds renforts sont constitués de monofilaments ou fils unitaires disposés en spirale et choisis dans le groupe des renforts de carbone, de tungstène, d'aramide haut module et d'acier.

Le choix de monofilaments de très hauts modules d'élasticité comme seconds renforts a l'avantage de procurer, pour une rigidité d'extension de ces seconds renforts donnée, une forte compacité de la structure du bourrelet. Cela est particulièrement appréciable pour les pneumatiques d'avion dont l'encombrement est très sévèrement contrôlé.

Selon un choix avantageux, les seconds renforts choisis sont des monofilaments d'acier de diamètre compris entre 0,7 et 1,3 mm. Lorsque leur diamètre dépasse 1,3 mm, leur mise en oeuvre devient très difficile car le renfort n'est plus assez flexible, lorsque leur diamètre diminue en dessous de 0,7 mm, la durée de leur application devient trop longue. Le coût de la structure du bourrelet est lui aussi réduit car le coût des monofilaments d'acier est très notablement inférieur à celui des câbles métalliques usuellement utilisés dans l'industrie du pneumatique.

L'utilisation de tels monofilaments comme seconds renforts d'ancrage est particulièrement indiqué dans le cas des pneumatiques d'avion, mais il est aussi approprié pour tout pneumatique pour lourdes charges dont on souhaite diminuer l'encombrement de la structure du bourrelet, par exemple pour des pneumatiques poids lourds ou génie civil.

De façon avantageuse, chaque alignement circonférentiel des premiers renforts est, dans chaque bourrelet, bordé axialement intérieurement et axialement extérieurement par des seconds renforts orientés sensiblement circonférentiellement.

Les premiers renforts ont, de préférence, un module sécant d'extension supérieur à 1000 cN/Tex et de tels renforts sont, par exemple, constitués de polyamide aromatique.

La couche de mélange de très haut module d'élasticité a une dureté shore A supérieure à 70. Cette couche a aussi un module sécant d'extension à 10 % supérieur à 20 MPa et de préférence supérieur à 30 MPa.

De préférence, l'armature de carcasse des pneumatiques selon l'invention comprennent deux ou trois alignements circonférentiels de renforts de haut module d'élasticité, en polyamide aromatique, par exemple.

Deux alignements circonférentiels sont nécessaires pour résister aux très fortes sollicitations mécaniques subies, mais il ne faut pas dépasser trois alignements pour ne pas de façon dommageable la rigidité en flexion des flancs.

Selon une caractéristique avantageuse du pneumatique selon l'invention, en considérant $\Sigma R_I$ somme des rigidités d'extension des seconds renforts disposés axialement intérieurement relativement à l'armature de carcasse et en considérant $\Sigma R_E$ somme des rigidités d'extension des seconds renforts disposés axialement de part et d'autre de l'armature de carcasse, on a :

$$0,6 \le \frac{\sum R_I}{\sum R_E} \le 1,5$$

et de préférence :

$$0,7 \le \frac{\sum R_I}{\sum R_E} \le 1,3$$

Le respect de ces limites pour le rapport entre la rigidité totale d'extension des seconds renforts disposés à l'intérieur de l'armature de carcasse dans chaque bourrelet et la rigidité totale d'extension des seconds renforts disposés à l'extérieur de l'armature de carcasse a l'avantage de rendre plus homogène la sollicitation des seconds renforts dans le bourrelet, quelle que soit leur position.

Selon une autre caractéristique préférentielle, la surface extérieure du bourrelet du pneumatique selon l'invention comportant un siège suivi d'une paroi tronconique d'orientation sensiblement radiale adjacente radialement intérieurement à une paroi de section droite sensiblement en arc de cercle et de centre C disposé extérieurement relativement au bourrelet, ces parois étant destinées à s'appuyer contre le crochet et le rebord d'une jante adaptée, en considérant une ligne CD, traversant le bourrelet du pneumatique en faisant un angle $\alpha$ = +45±5 degrés relativement à l'axe A du pneumatique, l'ensemble des seconds renforts est disposé à une distance radiale de l'axe du pneumatique inférieure ou égale à cette ligne CD. Cette ligne CD définit sensiblement une zone d'encastrement, très rigide, où les déformations sont très réduites et une zone de flexion radialement au-dessus de CD. Le fait que tous les seconds renforts se trouvent dans la zone d'encastrement renforce l'endurance du bourrelet.

De préférence, le bourrelet du pneumatique selon l'invention ayant une surface extérieure destinée à venir en contact avec la surface correspondante du siège et du crochet de la jante, après montage sur ladite jante et gonflage du pneumatique, la zone de contact entre la surface extérieure du bourrelet et la jante s'étend au moins jusqu'au point B du crochet de rayon maximum $R_J$.

Avantageusement, $\Phi$ étant le diamètre de la circonférence de la surface extérieure du bourrelet destinée à venir s'appuyer contre la circonférence du crochet de la jante de rayon maximum $R_J$, on a :

$$\Phi = 2(R_J - \varepsilon)$$

avec $\varepsilon$ compris entre 0,5 et 2 mm.

Cela permet au bourrelet de bien venir " s'asseoir " sur le siège et le crochet de la jante et a pour avantage de limiter la courbure prise par les alignements circonférentiels de l'armature de carcasse lors du roulage, particulièrement dans l'aire de contact.

Selon un mode de réalisation avantageux, les premiers renforts de l'armature de carcasse forment des allers et retours disposés de façon adjacente, avec, au niveau de chaque bourrelet, des boucles reliant chaque fois un aller à un retour.

Les caractéristiques et avantages de l'invention seront mieux compris à l'aide de la description qui suit et qui se réfère au dessin annexé illustrant à titre non limitatif des exemples de réalisation dans le cas de pneumatiques d'avion et sur lequel :

- la figure 1 présente schématiquement, vu en section axiale, un pneumatique selon l'invention ;
- la figure 2 est une vue en perspective, montrant schématiquement la disposition d'une partie des renforts de l'armature de carcasse ;
- la figure 3 présente un bourrelet d'un second mode de réalisation.

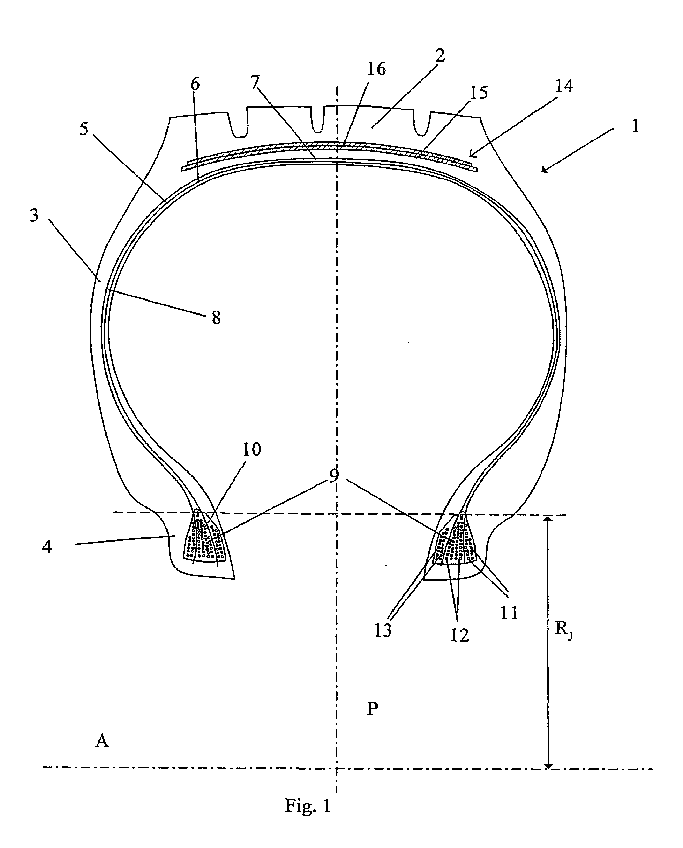

Le pneumatique 1 d'avion représenté schématiquement en demi-coupe axiale à la figure 1 comprend un sommet 2, deux flancs 3 et deux bourrelets 4. Une armature de carcasse 5 s'étend d'un bourrelet à l'autre et est constituée de deux alignements circonférentiels 6 et 7 de premiers renforts. Les alignements circonférentiels de premiers renforts 6 et 7 sont orientées radialement dans les flancs 3 et sont constituées de renforts en polyamide aromatique ou aramide. Les premiers renforts sont disposées parallèlement et sont séparés par une couche de mélange 8 dont la nature et le module sont adaptés en fonction de leur position dans le pneumatique.

L'ancrage des deux alignements circonférentiels 6 et 7 est assuré dans les bourrelets 3 par des alignements ou " piles " 9 de second renforts orientés circonférentiellement et disposés axialement de part et d'autre de chaque alignement circonférentiel de premiers renforts 6 et 7. Chaque alignement ou pile 9 de seconds renforts peut être obtenue par enroulement en spirale d'un renfort. Les premiers renforts, radiaux, et seconds renforts, circonférentiels, sont séparés les uns des autres par une couche de mélange caoutchoutique 10 de très haut module d'élasticité pour éviter tout contact direct d'un renfort avec un autre. Cette couche 10 a une dureté shore A supérieure à 70. Son module sécant d'extension à 10 % est aussi supérieur à 20 MPa et de préférence à 30 MPa. La tension qui se développe dans les premiers renforts lors du gonflage du pneumatique 1 est reprise notamment par l'adhésion latérale entre chaque alignement circonférentiel 6 et 7 et les piles 9 de renforts circonférentiels. Cette structure de bourrelet assure un excellent ancrage qui reste très efficace même pour les pressions de gonflage très élevées des pneumatiques d'avion, supérieures à 12 bars et pouvant atteindre 25 bars dans certaines applications particulières.

Les piles 9 de seconds renforts sont réparties en trois groupes, deux piles 11 disposées axialement extérieurement à l'armature de carcasse 5 du côté extérieur du pneumatique, deux piles 13 disposées axialement intérieurement relativement à l'armature de carcasse 5, du côté intérieur du pneumatique et 4 piles 12 disposées entre les deux alignements circonférentiels 6 et 7 de l'armature de carcasse 5.

Le second renfort utilisé dans ce pneumatique est un monofilament ou fil unitaire d'acier de diamètre 0,98 mm. Ce renfort est bien entendu adhérisé avec un revêtement laitonné ou zingué. Son usage permet d'obtenir un très faible encombrement pour une très forte rigidité d'extension de l'ensemble des piles 9. Son coût est aussi réduit relativement aux assemblages usuellement utilisés dans les pneumatiques.

De préférence, $\Sigma R_I$ étant la somme des rigidités d'extension des seconds renforts 12 disposés à l'intérieur de l'armature de carcasse 5 et $\Sigma R_E$ étant la somme des rigidités d'extension des seconds renforts 11, 13, disposés de part et d'autre de l'armature de carcasse 5, on a

$$0,6 \le \frac{\sum R_I}{\sum R_E} \le 1,5 \text{ et avantageusement}$$

$$0,7 \le \frac{\sum R_I}{\sum R_E} \le 1,3 \text{ . Dans le cas du pneumatique décrit, en considérant le nombre de spires disposées intérieurement et extérieurement relativement à l'armature}$$

de carcasse, on obtient :

$$\Sigma R_I / \Sigma R_E \cong 1,24.$$

Cela a l'avantage d'homogénéiser la sollicitation mécanique des seconds renforts dans le bourrelet.

On peut aussi noter que le nombre de spires des piles diminue progressivement avec la distance relativement à l'axe A du pneumatique 1. Il en résulte une forme sensiblement conique de la disposition des seconds renforts. Cela a pour avantage de stabiliser fortement les bourrelets 4 lors du gonflage du pneumatique et lors du passage dans l'aire de contact en service.

L'ensemble des spires des piles 9 est noyé dans le mélange caoutchoutique 10 de très haut module d'élasticité pour assurer une bonne reprise des efforts dus à la pression de gonflage et ainsi un excellent ancrage de l'armature de carcasse dans les bourrelets 4.

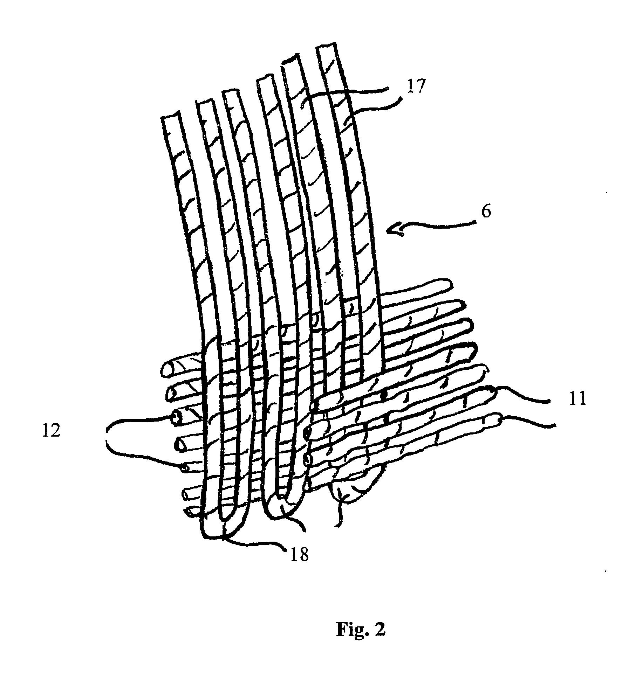

La figure 2 est une vue en perspective de l'un des alignements circonférentiels de premiers renforts, l'alignement 6, dans laquelle seuls les renforts sont représentés. Dans cette figure, on voit l'alignement circonférentiel 6 de premiers renforts qui est constitué de portions de renforts 17. A leurs extrémités radialement inférieures, les portions de renforts 17 forment des boucles 18 juxtaposées, situées dans le bourrelet 4. Ces boucles 18 sont adjacentes et ne se chevauchent pas. De part et d'autre axialement de l'alignement circonférentiel 6 de premiers renforts, sont représentées seulement les piles 11 et 12 directement adjacentes à cet alignement 6. Pour la clarté du dessin, seul l'alignement circonférentiel 6 de premiers renforts et deux piles ont été représentés, mais, l'alignement circonférentiel 7 de premiers renforts présente la même disposition des portions de renforts 17.

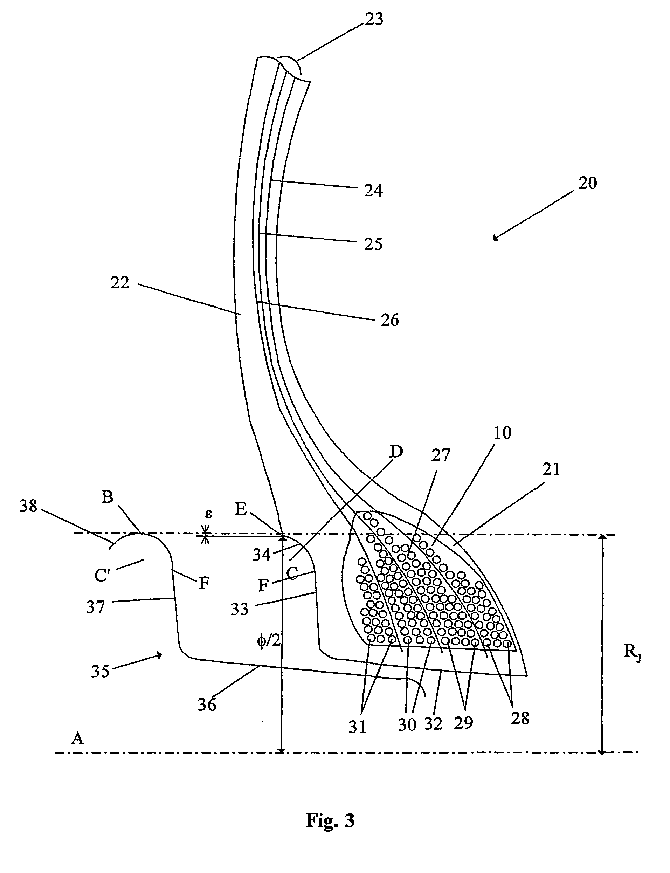

La figure 3 présente un bourrelet 21 et un flanc 22 d'un second mode de réalisation d'un pneumatique 20 selon l'invention dans lequel l'armature de carcasse 23 est constituée de trois alignements circonférentiels, 24, 25, 26, de renforts en polyamide aromatique ou aramide. Dans le bourrelet 21 sont disposées des piles 27 de seconds renforts d'orientation circonférentielle. Ces piles 27 sont ici séparées en quatre groupes. On trouve successivement axialement du côté intérieur du bourrelet vers le côté extérieur, trois piles 28 disposées intérieurement relativement à l'alignement circonférentiel de premiers renforts 24, quatre piles 29 disposées entre les alignements circonférentiels de premiers renforts 24 et 25, trois piles 30 disposées entre les alignements circonférentiels 25 et 26 et trois piles 31 disposées axialement extérieurement relativement à l'alignement 26.

Comme précédemment, les seconds renforts sont constitués de monofilaments ou fils unitaires d'acier et le nombre de spires est tel que l'on vérifie que la somme des rigidités d'extension des piles disposées extérieurement relativement à l'armature de carcasse est sensiblement du même ordre que la somme des rigidités d'extension des piles disposées intérieurement relativement à l'armature de carcasse 23.

La surface extérieure du bourrelet 21 comprend un siège 32, une paroi tronconique d'orientation sensiblement radiale 33 adjacente radialement intérieurement à une paroi 34 dont la section est un arc de cercle EF de centre C. C est disposé à l'extérieur du bourrelet 21. En considérant la ligne CD qui traverse le bourrelet en faisant un angle $\alpha = +45\pm5$ degrés relativement à l'axe A du pneumatique (cet angle est déterminé lorsque le pneumatique est monté sur sa jante), on constate que l'ensemble des seconds renforts 27 est disposé à une distance radiale de l'axe A inférieure ou égale à cette ligne CD. Cette ligne CD définit sensiblement une zone d'encastrement très rigide où les déformations sont très réduites et une zone de flexion radialement au-dessus de CD. Le fait que tous les seconds renforts se trouvent dans la zone d'encastrement renforce l'endurance du bourrelet.

Cette surface extérieure du bourrelet est destinée à venir s'appuyer contre la paroi d'une jante 35 dont le profil extérieur est aussi représenté à la figure 3. Ce profil comprend le siège 36 et la paroi sensiblement radiale du crochet 37 suivie du rebord 38. Le rebord 38 a une section droite en arc de cercle de centre C'. Le point de diamètre le plus élevé est B, de rayon $R_J$. Le point E disposé sur la surface axialement extérieure du bourrelet 21 est destiné à venir en contact avec sensiblement le point B. Lorsque le pneumatique est monté sur la jante 35, les surfaces 34 et 38 sont homocentriques, c'est-à-dire que leurs centres C et C' sont confondus. Le point E est disposé sur une circonférence de diamètre Φ. On a la relation :

$$\Phi = 2(R_J - \varepsilon)$$

avec ε compris entre 0,5 et 2 mm.

Ce léger décalage du point E entre sa position libre et sa position montée sur la jante, en contact avec B, permet au bourrelet d'être légèrement mis en extension lors de son montage sur la jante et favorise la qualité du contact obtenu. Ce contact jusqu'au point E renforce la stabilité du bourrelet lors de la mise en pression du pneumatique et lors du passage dans l'aire de contact en service. En conséquence, on constate que les alignements circonférentiels de l'armature de carcasse sont nettement moins sollicités en compression lors du passage dans l'aire de contact contrairement à ce qui se passe pour des pneumatiques d'avion d'architecture classique.

A la figure 1 est aussi présenté un exemple d'armature de sommet 14. Celle-ci est constituée d'un bloc de travail comportant deux nappes de renforts 15 et 16 d'orientation sensiblement circonférentielle obtenues par enroulement hélicoïdal d'au moins un renfort. Ce renfort est constitué de renforts en polyamide aromatique ou aramide. Le nombre de nappes de renfort ainsi que le pas de pose sont adaptés en fonction de la dimension du pneumatique et de ses conditions d'utilisation. Ce mode de réalisation d'une armature de sommet a l'avantage de procurer un frettage très efficace qui minimise la variation des dimensions du pneumatique lors du gonflage ainsi qu'à haute vitesse. On constate que l'évolution du profil peut être trois à quatre fois plus faible que pour un pneumatique d'avion usuel tel un 30-7.7R16 AIRX. Cet excellent frettage a aussi l'avantage de ne pas mettre en forte extension les mélanges constituant la bande de roulement du sommet du pneumatique. Les fissurations en surface de la bande de roulement dues à l'ozone présente dans l'air sont fortement réduites.

On a testé un pneumatique selon l'invention de dimension 30 - 7,7 R 16 comportant :

- comme armature de carcasse trois alignements circonférentiels de premiers renforts constitués de retors adhérisé de titre égal à 501 tex élaborés à partir de 3 brins aramide identiques de 167 tex. La densité des premiers renforts est de 88 f/dm dans la zone des bourrelets ;

- comme seconds renforts des monofilaments d'acier de diamètre 0,98 mm et répartis en 13 piles 9 :

  • 3 piles axialement les plus intérieures avec 14, 17 et 20 spires,
  • 4 piles entre les alignements circonférentiels 24 et 25 avec 10, 14, 16 et 20 spires,
  • 3 piles entre les alignements circonférentiels 25 et 26 avec 19, 15 et 10 spires, et
  • 3 piles axialement les plus extérieures avec 14, 10 et 7 spires.

- une armature de sommet avec trois nappes de renforts orientés sensiblement circonférentiellement constitués de retors adhérisés de titre égal à 660 tex élaborés à partir de 2 brins aramides identiques de 330 tex ; les renforts ont un pas de pose de 1,2 mm.

La couche de mélange de très haut module d'élasticité avait un module sécant d'extension de 45 MPa et une dureté shore A de 90.

Ce pneumatique a subi des tests de résistance à l'éclatement et les pressions maximales mesurées ont été de l'ordre de 100 bars. Il est aussi caractérisé par un taux d'allongement de son développement entre la pression nulle et sa pression de service de 15 bars de l'ordre de 1,5 %. Ce pneumatique a aussi subi avec succès des tests de décollage similaires aux tests normalisés pour l'homologation des pneumatiques pour avion.

La confection du pneumatique selon l'invention peut avantageusement être réalisée sur un noyau rigide imposant la forme de sa cavité intérieure, tels ceux décrits par EP 242 840 ou EP 822 047, incorporés par référence dans la présente demande. On applique sur ce noyau, dans l'ordre requis par l'architecture finale, tous les constituants du pneumatique, qui sont disposés directement à leur place finale, sans subir de conformation à aucun moment de la confection. La cuisson s'effectue sur noyau, celui-ci n'étant retiré qu'après la phase de vulcanisation.

Ce mode de fabrication a l'avantage de réduire fortement voire d'éliminer les précontraintes imposées aux renforts, particulièrement à ceux orientés à 0°, lors des phases traditionnelles de conformation

On peut aussi refroidir partiellement le bandage sur le noyau pour maintenir les renforts dans l'état de déformation imposé lors de la pose.

On peut aussi, de manière équivalente, fabriquer le pneumatique sur un tambour tel que décrit dans WO 97/47 463 ou EP 0 718 090, à condition de faire la conformation de l'ébauche du pneumatique avant d'effectuer la pose des renforts orientés circonférentiellement.

On peut encore réaliser la pose des renforts orientés circonférentiellement sur une forme à la géométrie identique à la forme visée dans le moule de cuisson. Le bloc sommet est ensuite assemblé avec l'ébauche complémentaire du pneumatique suivant des techniques de transfert connues de l'homme de l'art, puis, toujours suivant des principes connus, le pneumatique est emboîté et mis sous pression par déploiement d'une membrane à l'intérieur du pneumatique.

Ce mode de réalisation garantit aussi l'absence de précontraintes dues à la conformation en presse de vulcanisation.

## Revendications

1. Pneumatique (1, 20) comprenant un sommet (2), deux flancs (3) et deux bourrelets 4, 21), une armature de carcasse (5) ancrée dans chacun des bourrelets et une armature de sommet, dans lequel l'armature de carcasse comprend au moins deux alignements circonférentiels (6, 7, 24, 25, 26) de premiers renforts de haut module d'élasticité dont le module sécant d'extension est supérieur à 1000 cN/Tex, chaque alignement circonférentiel desdits premiers renforts étant, dans chaque bourrelet, bordé axialement par des seconds renforts (9, 11, 12, 13, 27, 28, 29, 30, 31) orientés sensiblement circonférentiellement de module supérieur ou égal à celui desdits premiers renforts, lesdits premiers renforts et seconds renforts étant séparés par une couche de mélange (10) de très haut module d'élasticité dont le module sécant d'extension à 10 % et à température ambiante est supérieur à 20 MPa et de préférence supérieur à 30 MPa, et dans lequel lesdits seconds renforts sont constitués de monofilaments ou fils unitaires disposés en spirale et choisis dans le groupe des renforts de carbone, de tungstène, d'aramide haut module et d'acier.

2. Pneumatique (1, 20) selon la revendication 1, **caractérisé en ce que** lesdits seconds renforts sont constitués de monofilaments ou fils unitaires d'acier.

3. Pneumatique (1, 20) selon l'une des revendications 1 et 2, **caractérisé en ce que** lesdits seconds renforts sont des monofilaments d'acier dont le diamètre est compris entre 0,7 et 1,3 mm.

4. Pneumatique (1, 20) selon l'une des revendications 1 à 3, **caractérisé en ce que** chaque alignement circonférentiel desdits premiers renforts est, dans chaque bourrelet, bordé axialement intérieurement et axialement extérieurement par lesdits seconds renforts orientés sensiblement circonférentiellement.

5. Pneumatique (1, 20) selon l'une des revendications 1 à 4, **caractérisé en ce que,** en considérant ΣR$_I$ somme des rigidités d'extension des seconds renforts disposés axialement entre les alignements les plus extrêmes de la carcasse et en considérant ΣR$_E$ somme des rigidités d'extension des seconds renforts disposés axialement de part et d'autre de l'armature de carcasse, on a : .

$$0,6 \le \frac{\sum R_I}{\sum R_E} \le 1,5$$

6. Pneumatique selon la revendication 5, **caractérisé en ce que :**

$$0,7 \le \frac{\sum R_I}{\sum R_E} \le 1,3$$

7. Pneumatique (1, 20) selon l'une des revendications 1 à 6, **caractérisé en ce que**, 1a surface extérieure des bourrelets comprenant un siège, une paroi tronconique d'orientation sensiblement radiale adjacente radialement intérieurement à une paroi dont la section est un arc de cercle EF de centre C, ledit centre C étant disposé axialement extérieurement relativement au bourrelet, et en considérant une ligne CD traversant le bourrelet en faisant un angle α = +45±5 degrés relativement à l'axe A du pneumatique, l'ensemble des seconds renforts est disposé radialement intérieurement relativement à ladite ligne CD.

8. Pneumatique (1, 20) selon l'une des revendications 1 à 7, **caractérisé en ce que** l'armature de carcasse est constituée d'au plus trois alignements circonférentiels de premiers renforts.

9. Pneumatique (1, 20) selon l'une des revendications 1 à 8, **caractérisé en ce que** lesdits premiers renforts de l'armature de carcasse forment des allers et retours disposés de façon adjacente, avec, au niveau de chaque bourrelet, des boucles reliant chaque fois un aller à un retour.

10. Pneumatique (1, 20) selon l'une des revendications 1 à 9, **caractérisé en ce que** les premiers renforts sont constitués de polyamide aromatique.

11. Pneumatique d'avion selon l'une des revendications 1 à 10, **caractérisé en ce que** la couche de mélange de très haut module d'élasticité a une dureté shore A supérieure à 70.

12. Ensemble monté constitué d'un pneumatique (1, 20), tel que défini selon l'une des revendications 1 à 11, et d'une jante (35) comprenant des sièges (36) et des crochets (37), les bourrelets (4, 21) du pneumatique ayant des surfaces extérieures destinées à venir en contact avec la surface correspondante des sièges et des crochets de ladite jante, après montage sur ladite jante et gonflage dudit pneumatique, **caractérisé en ce que** 1a zone de contact entre ladite surface extérieure dudit bourrelet et ladite jante s'étend jusqu'au point B du crochet de rayon maximum R$_J$.

13. Ensemble monté selon la revendication 12, **caractérisé en ce que** Φ étant le diamètre de la circonférence de la surface extérieure du bourrelet destinée à venir s'appuyer contre la circonférence du crochet de la jante de rayon maximum R$_J$, on a :

$$\Phi = 2(R_J - \varepsilon)$$

avec ε compris entre 0,5 et 2 mm.

**Claims**

1. A tyre (1, 20), comprising a crown (2), two sidewalls (3) and two beads (4, 21), a carcass reinforcement (5) anchored in each of the beads and a crown reinforcement, in which the carcass reinforcement comprises at least two circumferential alignments (6, 7, 24, 25, 26) of first reinforcing threads of high elasticity modulus, each circumferential alignment of said first reinforcing threads being, within each bead, bordered axially by second reinforcing threads (9, 11, 12, 13, 27, 28, 29, 30, 31) oriented substantially circumferentially of a modulus greater than or equal to that of said first reinforcing threads, said first reinforcing threads and second reinforcing threads being separated by a layer of mix (10) of very high elasticity modulus which secant modulus of extension at 10% deformation greater than 20 MPa and preferably greater than 30 MPa, and in which said second reinforcing threads are formed of monofilaments or unit threads arranged in a spiral and selected from the group consisting of carbon, tungsten, high-modulus aramid and steel reinforcing threads.

2. A tyre (1, 20) according to Claim 1, **characterized in that** said second reinforcing threads are formed of monofilaments or unit threads of steel.

3. A tyre (1, 20) according to one of Claims 1 and 2, **characterized in that** said second reinforcing threads are steel monofilaments of a diameter of between 0.7 and 1.3 mm.

**4.** A tyre (1, 20) according to one of Claims 1 to 3, **characterized in that** each circumferential alignment of said first reinforcing threads is, within each bead, bordered axially internally and axially externally by said second reinforcing threads oriented substantially circumferentially.

**5.** A tyre (1, 20) according to one of Claims 1 to 4, **characterized in that**, considering $\Sigma R_I$ as being the total of the rigidities of extension of the second reinforcing threads arranged axially internally relative to the carcass reinforcement and considering $\Sigma R_E$ as being the total of the rigidities of extension of the second reinforcing threads arranged axially on either side of the carcass reinforcement, then:

$$0.6 \le \frac{\sum R_I}{\sum R_E} \le 1.5$$

**6.** A tyre according to Claim 5, **characterized in that**:

$$0.7 \le \frac{\sum R_I}{\sum R_E} \le 1.3$$

**7.** A tyre (1, 20) according to one of Claims 1 to 6, **characterized in that**, the outer surface of the beads comprising a seat, a frustoconical wall of substantially radial orientation adjacent radially internally to a wall the section of which is an arc of a circle EF of centre C, said centre C being arranged axially externally relative to the bead, and considering a line CD passing through the bead, forming an angle $\alpha$ = +45$\pm$5 degrees relative to the axis A of the tyre, all the second reinforcing threads are arranged radialy internally to said line CD.

**8.** A tyre (1, 20) according to one of Claims 1 to 7, **characterized in that** the carcass reinforcement is formed of at most three circumferential alignments of first reinforcing threads of high elasticity modulus.

**9.** A tyre (1, 20) according to one of Claims 1 to 8, **characterized in that** said first reinforcing threads of the carcass reinforcement form forward and return paths arranged adjacently, with, at the level of each bead, loops connecting one forward to one return path each time.

**10.** A tyre (1, 20) according to one of Claims 1 to 9, **characterized in that** the first reinforcing threads are formed of aromatic polyamide.

**11.** An aircraft tyre according to one of Claims 1 to 10, **characterized in that** the layer of mix of very high elasticity modulus has a Shore A hardness of greater than 70.

**12.** A mounted assembly formed of a tyre (1, 20) according to one of Claims 1 to 11 and of a rim (35) comprising seats (36) and hooks (37), the beads (4, 21) of the tyre having outer surfaces intended to come into contact with the corresponding surface of the seats and of the hooks of said rim, after mounting on said rim and inflation of said tyre, **characterized in that** the contact zone between said outer surface of said bead and said rim extends as far as point B of the hook of maximum radius $R_J$.

**13.** A mounted assembly according to Claim 12, **characterized in that**, $\Phi$ being the diameter of the circumference of the outer surface of the bead intended to come to bear against the circumference of the hook of the rim of maximum radius $R_J$, then:

$$\Phi = 2(R_J - \varepsilon)$$

with $\varepsilon$ being between 0.5 and 2 mm.

**Patentansprüche**

**1.** Luftreifen (1, 20) mit einem Scheitel (2), zwei Flanken (3) und zwei Wülsten (4, 21), mit einer in jedem der Wülste verankerten Karkassenbewehrung (5) und mit einer Scheitelbewehrung, wobei die Karkassenbewehrung mindestens zwei Umfangsanordnungen (6, 7, 24, 25, 26) von ersten Verstärkungen mit hohem Elastizitätsmodul enthält, deren Dehnungs-Sekantenmodul höher als 1000 cN/Tex ist, wobei jede Umfangsanordnung der ersten Verstärkungen in jedem Wulst axial von zweiten im Wesentlichen in Umfangsrichtung ausgerichteten Verstärkungen (9, 11, 12, 13, 27, 28, 29, 30, 31) mit einem Modul umrandet wird, der höher als der oder gleich demjenigen der ersten Verstärkungen ist, wobei die ersten und zweiten Verstärkungen durch eine Mischungsschicht (10) mit sehr hohem Elastizitätsmodul getrennt werden, deren Dehnungs-Sekantenmodul bei 10 % und bei Umgebungstemperatur höher als 20 MPa und vorzugsweise höher als 30 MPa ist, und wobei die zweiten Verstärkungen aus Monofilamenten oder Einzelfäden bestehen, die spiralförmig angeordnet sind und aus der Gruppe der Verstärkungen aus Kohlenstoff, Wolfram, Hochmodul-Aramid und Stahl ausgewählt werden.

**2.** Luftreifen (1, 20) nach Anspruch 1, **dadurch gekennzeichnet, dass** die zweiten Verstärkungen aus Monofilamenten oder Einzelfäden aus Stahl bestehen.

3. Luftreifen (1, 20) nach einem der Ansprüche 1 und 2, **dadurch gekennzeichnet, dass** die zweiten Verstärkungen Stahl-Monofilamente sind, deren Durchmesser zwischen 0,7 und 1,3 mm liegt.

4. Luftreifen (1, 20) nach einem der Ansprüche 1 bis 3, **dadurch gekennzeichnet, dass** jede Umfangsanordnung der ersten Verstärkungen in jedem Wulst axial innen und axial außen von den zweiten Verstärkungen umrandet wird, die im Wesentlichen in Umfangsrichtung ausgerichtet sind.

5. Luftreifen (1, 20) nach einem der Ansprüche 1 bis 4, **dadurch gekennzeichnet, dass**, indem $\Sigma R_I$ als Summe der Dehnungssteifigkeiten der zweiten Verstärkungen angenommen wird, die axial zwischen den äußersten Anordnungen der Karkasse angeordnet sind, und indem $\Sigma R_E$ als Summe der Dehnungssteifigkeiten der zweiten Verstärkungen angenommen wird, die axial zu beiden Seiten der Karkassenbewehrung angeordnet sind, gilt:

$$0,6 \le \frac{\sum R_I}{\sum R_E} \le 1,5$$

6. Luftreifen nach Anspruch 5, **dadurch gekennzeichnet, dass** gilt:

$$0,7 \le \frac{\sum R_I}{\sum R_E} \le 1,3$$

7. Luftreifen (1, 20) nach einem der Ansprüche 1 bis 6, **dadurch gekennzeichnet, dass,** wenn die Außenfläche der Wülste einen Sitz und eine kegelstumpfförmige Wand mit im Wesentlichen radialer Ausrichtung enthält, die radial innen einer Wand benachbart ist, deren Querschnitt ein Kreisbogen EF mit der Mitte C ist, wobei die Mitte C bezüglich des Wulsts axial außen angeordnet ist, und bei Betrachtung einer Linie CD, die den Wulst durchquert, indem sie einen Winkel $\alpha = +45 \pm 5$ Grad bezüglich der Achse A des Luftreifens bildet, die Gesamtheit der zweiten Verstärkungen radial innen bezüglich der Linie CD angeordnet ist.

8. Luftreifen (1, 20) nach einem der Ansprüche 1 bis 7, **dadurch gekennzeichnet, dass** die Karkassenbewehrung aus höchstens drei Umfangsanordnungen von ersten Verstärkungen besteht.

9. Luftreifen (1, 20) nach einem der Ansprüche 1 bis 8, **dadurch gekennzeichnet, dass** die ersten Verstärkungen der Karkassenbewehrung Hin- und Rückwege formen, die nebeneinander angeordnet sind, mit in Höhe jedes Wulsts Schleifen, die jedes Mal einen Hin- und einen Rückweg verbinden.

10. Luftreifen (1, 20) nach einem der Ansprüche 1 bis 9, **dadurch gekennzeichnet, dass** die ersten Verstärkungen aus aromatischem Polyamid bestehen.

11. Flugzeugreifen nach einem der Ansprüche 1 bis 10, **dadurch gekennzeichnet, dass** die Mischungsschicht mit sehr hohem Elastizitätsmodul eine Shore-A-Härte höher als 70 hat.

12. Montierte Einheit, die aus einem Luftreifen (1, 20), wie er in einem der Ansprüche 1 bis 11 definiert ist, und aus einer Felge (35) besteht, die Sitze (36) und Nutpartien (37) enthält, wobei die Wülste (4, 21) des Luftreifens Außenflächen haben, die dazu bestimmt sind, mit der entsprechenden Fläche der Sitze und der Nutpartien der Felge nach der Montage auf die Felge und Aufpumpen des Luftreifens in Kontakt zu kommen, **dadurch gekennzeichnet, dass** die Kontaktzone zwischen der Außenfläche des Wulsts und der Felge sich bis zum Punkt B der Nutpartie mit maximalem Radius $R_J$ erstreckt.

13. Montierte Einheit nach Anspruch 12, **dadurch gekennzeichnet, dass**, wenn $\Phi$ der Durchmesser des Umfangs der Außenfläche des Wulsts ist, die dazu bestimmt ist, sich gegen den Umfang der Nutpartie der Felge mit maximalem Radius $R_J$ anzulegen, gilt:

$$\Phi = 2(R_J - \varepsilon)$$

mit $\varepsilon$ zwischen 0,5 und 2 mm.

Fig. 1

**Fig. 2**

Fig. 3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4832102 A
- FR 2771050 A
- EP 0582196 A
- EP 0664232 A
- WO 9854006 A
- EP 242840 A
- EP 822047 A
- WO 9747463 A
- EP 0718090 A